# EUROPÄISCHE PATENTSCHRIFT

(11) **EP 2 879 279 B1**
(45) Veröffentlichungstag und Bekanntmachung des Hinweises auf die Patenterteilung: **29.07.2020**
(21) Anmeldenummer: 14401109.5
(22) Anmeldetag: 27.11.2014
(51) Int. Cl.: H02K 17/16, H02K 3/48, H02K 17/20, H02K 15/00

(54) **Kurzschlussläufer mit Kurzschlussläuferstäben für rotierende elektrische Maschinen**
Squirrel cage rotor with squirrel cage rotor rods for rotating electric machines
Rotor en court circuit doté de barre de rotor de cage d'écureuil pour machine à rotation électrique

(30) Priorität: 28.11.2013 DE 102013113161
(43) Veröffentlichungstag der Anmeldung: 03.06.2015
(73) Patentinhaber: VEM Sachsenwerk GmbH, 01257 Dresden (DE)
(72) Erfinder: Winter, Ulrich, 01796 Sruppen (DE); Philipps, Frank, 01731 Kreischa (DE)
(74) Vertreter: Drechsler, Gottfried

(56) Entgegenhaltungen:
- AT-B- 286 429
- DE-A1- 2 836 229
- DE-A1-102009 014 460
- DE-C- 572 619
- US-A- 6 092 277

## Beschreibung

Die Erfindung betrifft einen Kurzschlussläufer mit Kurzschlussläuferstäben für rotierende elektrische Maschinen insbesondere mit Umrichterspeisung nach dem Oberbegriff des Anspruches 1.

Bei hochpoligen umrichtergespeisten Asynchronmotoren treten systembedingt bei relativ kleinen Luftspalten zwischen Ständer und Läufer im Betrieb große Luftspaltinduktionen auf. Deshalb sind die Druckfinger, welche die Läuferzähne bei solch großen rotierenden elektrischen Asynchronmotoren mit hoher elektromagnetischer Ausnutzung halten, weit vom Läuferaußendurchmesser zurückzusetzen um zusätzliche Eisenverluste zu vermeiden. Die bei der Umrichterspeisung auftretenden Belastungsspiele und Pulsmusteränderungen haben schnelle Änderungen in der Erwärmung der Kurzschlussstäbe zur Folge. Dabei kommt es zu einem Thermospiel zwischen den Kurzschlussstäben und dem Blechpaket. Allgemein ist es bekannt, dass große Blechpakete für Asynchronmotoren mit vorgefertigten Kurzschlussstäben sich durch Verpressen der Stäbe oder durch VPI-Tränkung nur schwer so dauerhaft verfestigen lassen, um ein Aufspreizen besonders der Endblechpakete zuverlässig zu verhindern. Insbesondere bei erhöhter Last oder ungünstigen Oberwellenspektren kommt es zu einer erheblichen Erwärmung der Kurzschlussstäbe. Auf Grund der unterschiedlichen Ausdehnungskoeffizienten dehnen sich die Kurzschlussstäbe weit stärker aus als das Blechpaket. Allgemein gilt, je fester die Kurzschlussstäbe in den Nuten des Blechpakets eingepasst sind, um so besser ist die thermische Ankopplung der Kurzschlussstäbe an das Läuferblechpaket. Dies bedingt ein direktes Anliegen der Einzelbleche in der Nut am Kurschlussstab. Beim Ausdehnen der Kurzschlussstäbe kommt es deshalb vor allem bei vorstehenden Stanzgrad zum Verschieben der Einzelbleche, d. h. einem Aufspreizen (Auffächern) der einzelnen Bleche in axialer Richtung. Liegt dann immer mal wieder zu bestimmten Zeitpunkten eine geringe Belastung, ein Leerlauf oder ein Abschalten des Asynchronmotors vor, kühlen die einzelnen Kurschlussstäbe ab und ziehen sich dabei wieder zusammen. Die aufgespreizten Einzelbleche werden aber in den seltensten Fällen wieder in die ursprüngliche Ausgangslage gezogen. Dieser Effekt ist seit langen bekannt. Deshalb wurde früher zur axialen Fixierung ein Verstemmen mit einem Meißel bei offenen oder halboffenen Nuten mit dem Läuferblechpaket vorgenommen. Darüber hinaus sind noch Lösungen bekannt, bei denen zur axialen Sicherung der Kurzschlussstäbe an den überstehenden Enden des Blechpakets zusätzliche Formstücke angelötet werden um damit Anschläge an das Blechpaket zu erreichen, welche die Kurzschlussstäbe gegen das Verschieben sichern. Dies ist allerdings besonders aufwändig, erzeugt zusätzliche Kosten und beansprucht einen gesonderten Bauraum.

In der DE 30 06 761 A1 ist eine technische Lösung vorgeschlagen worden, bei der bei geschlossenen Nuten auf einfache und sichere Art und Weise eine dauerhafte Fixierung der Kurzschlussstäbe zu einem steifen Kurzschlusskäfig erfolgen soll. Dabei werden die Kurzschlussstäbe zunächst einseitig mit einer Prägewarze oder mit einer Kröpfstelle versehen, bevor diese bis zu dieser Art Anschlag von der Stirnseite her in das Blechpaket eingeschoben werden. Der Anschlag wird durch diese Art Erhebung gebildet. Diese Erhebung ist gesondert bereits vor dem Stabeinbau herzustellen. Die Herstellung der Prägewarze bzw. der Kröpfstelle bedeutete aber eine erhebliche, d. h. eine über den gesamten Stabquerschnitt gehende Störung der Materialgefügestruktur des Kurzschlussstabes an dieser Stelle. Vor allem bei hoch ausgenutzten elektrischen Maschinen können diese Eingriffe in das Materialgefüge schnelle Schäden bedingen. Zudem kann hier nur jeder zweite Kurzschlussläuferstab zur axialen Fixierung und damit zur Verbesserung der mechanischen Festigkeit genutzt werden.

In der DE 102 47 483 A1 ist eine andere Variante aufgezeigt, bei der in den angeordneten Streuschlitzen eines Kurzschlusskäfigläufers ein Verstemmen der Kurzschlussstäbe mit dem Blechpaket erfolgt. Dabei wird der Streuschlitz als verschieden breite Nut ausgebildet, wobei immer in den Bereichen, wo der Streuschlitz verbreitert ausgeführt ist, das Verstemmen der Kurzschlussstäbe mit dem Blechpaket mittels eines Meißels erfolgt. Damit soll eine mechanisch besonders feste Konstruktion des Kurzschlussläufers erreicht werden.

In der AT 286 429 B sollen Kurzschlussstäbe mittels scheibenartigen Einfräsungen über eine axiale Mittenfixierung festgesetzt werden, so dass die Wärmedehnung der Stäbe gleichmäßig nach beiden Seiten sich auswirkt und die eingelöteten oder eingeschweißten Kurzschlussstäbe außen außerhalb des Blechpakets im Kurzschlussring keine Risse an ihren Verbindungen bekommen. Dadurch sollen Ausdehnungsdifferenzen zwischen den einzelnen Kurzschlussstäben verhindert werden, wobei jedoch die Differenzen zwischen dem Kupfermaterial und dem Blechpaket bestehen bleiben. Was insgesamt nachteilig ist.

Auch in der technischen Lösung gemäß der US 6,092,277 A, wo ein spezieller Herstellungsprozess eines Kurzschlussläufers beschrieben ist, bei dem die Kurzschlussstäbe gestaucht werden sollen, sind teilweise nutartige Vertiefungen in den Kurzschlussstäben angeordnet. Das Ziel dieser Erfindung ist die Reduzierung der Relativbewegung der Kurzschlussstäbe im Hinblick auf das Läuferblechpaket. Stabvertiefungen sind nur im Inneren des Blechpaketes und nicht an seinen Enden außerhalb des Blechpaketes angeordnet.

In der DE572619 C ist ein Kurzschlussläufer mit nutförmigen Stabvertiefungen nach der Präambel des unabhängigen Patentanspruchs 1 offenbart.

Der Erfindung liegt die Aufgabe zu Grunde einen Kurschlussläufer mit Kurzschlussstäben für rotierende elektrische Maschinen zu schaffen, welche niedrige Zusatzverluste generieren und das thermisch bedingte Aufblättern der Blechpakete insbesondere an den Endbereichen des Blechpakets bzw. der Teilblechpakete zuverlässig verhindern, dabei den Arbeitsaufwand für die Herstellung gegenüber bisher bekannten Kurschlussläufern durch Einsparung von einigen Fertigungsschritten erheblich verringert ohne die Gefügestruktur der Kurzschlussstäbe zu verändern.

Die Aufgabe wird erfindungsgemäß mit den Merkmalen des Oberbegriffs und des kennzeichnenden Teils des ersten Patentanspruches gelöst. Weitere vorteilhafte Ausgestaltungen sind in den Unteransprüchen beschrieben. Beim erfindungsgemäßen Kurschlussläufer 1 mit in die Läufernuten 4 eines Blechpakets 2 eingelegten Kurschlussläuferstäben 6 für rotierende elektrische Maschinen, sind in den in die Läufernuten 4 im Blechpaket 2 verteilt eingelegten Kurschlussläuferstäben 6 im oberen Stabbereich 7 nutförmige Stabvertiefungen 8 durchgehend über die gesamte Stablänge 11 angeordnet. Nach den Nutausgängen 12 sind die genuteten Kurzschlussläuferstäbe 6 aufgespreizt ausgebildet. Dieses Aufspreizen erfolgt indem mittels eines geeigneten keilförmigen Werkzeuges, mit dem die Nutflanken nach außen gedrückt werden, d. h. die Nut wird an dieser Stelle aufgeweitet so dass ein aufgespreizter Stabbereich 9 entsteht. Da die nutförmigen Stabvertiefungen 8 nur im obersten Bereich eines Kurzschlussstabes 6 angeordnet sind, erfolgt nach dem Spreizen nur eine sehr geringe Materialgefügeveränderung im obersten Bereich des Kurzschlussstabes 6, was keinen Einfluss auf die Festigkeit des gesamten Stabes in diesem Bereich hat. Die vorstehenden oberen freien Ecken der Zähne 3, d. h. des Zahnkopfes 5 des Blechpaketes 2 werden durch den gespreizten Stabbereich 9 (gespreizte Nutflanken) der Kurzschlussstäbe 6 während des abkühlungsbedingten Zusammenziehens wieder in die ursprüngliche Ausgangslage zurückgezogen. Ein dauerhaftes Aufblättern der Zähne 3 an den Nutausgängen 12 wird hiermit zuverlässig vermieden.

Nach einer vorteilhaften Ausgestaltung der Erfindung ist der Kurschlussläufer 1 mit Kurschlussläuferstäben 6 so ausgeführt, dass in allen Kurzschlussläuferstäben 6 über die gesamte Stablänge 11 nutartige Stabvertiefungen 8 angeordnet sind, welche nach der Stabmontage aufgespreizt ausgebildet sind.

Generell ist es auch möglich, dass beim Kurschlussläufer 1 mit Kurschlussläuferstäben 6 nur in jedem zweiten Kurzschlussläuferstab 6 im Kurzschlussläufer 1 über die gesamte Stablänge 11 die nutartigen Stabvertiefungen 8 angeordnet sind und aufgespreizt werden. In dieser Ausführung wird ebenfalls jeder einzelne Zahn 3 des Blechpakets 3 durch einen gespreizten Stabbereich gehalten. Allerdings jeweils nur an seiner linken oder rechten Zahnflanke d. h. auf einer Seite. Das ist in einigen Fällen durchaus ausreichend um das Aufblättern der Zähne an den Nutausgängen 12 zuverlässig zu verhindern.

Besteht das Blechpaket 2 des Kurschlussläufers 1 mit Kurschlussläuferstäben 6 aus zwei oder mehreren Teilblechpaketen 14, dann sind die nutartigen Stabvertiefungen 8 im Kurzschlussläuferstab 6 auch jeweils im Bereich der Nutausgänge 12 in den Zwischenräumen zwischen den Teilblechpaketen 14 ausgebildet und aufgespreizt. Wahlweise können die gespreizten Stabbereiche 9 in allen Nutzwischenräumen nach den Nutausgängen 12 oder auch nur an einzelnen Nutausgängen 12 unterschiedlich zwischen den Teilblechpaketen 14 verteilt ausgeführt und angeordnet sein.

Es ist auch möglich, dass in einer Sonderausführung des neuartigen Kurschlussläufers 1 mit Kurschlussläuferstäben 6 die nutartigen Stabvertiefungen 8 im Kurzschlussläuferstab 6 nur jeweils im Bereich der Nutausgänge 12 an den beiden Enden des Blechpakets 2 ausgebildet sind. In diesem Fall sind die gespreizten Stabbereiche 9 nur nach den beiden Nutausgängen 12 jeweils links und rechts am Ende des Blechpakets 2 angeordnet, d. h. es werden nur die Endbleche des Blechpakets 2 beim abkühlungsbedingten Zusammenziehen wieder in die Ausgangslage zurück bewegt.

Erfindungsgemäß sind die nutartigen Stabvertiefungen 8 in den Kurschlussläuferstäben 8 im Querschnitt wannenförmig ausgebildet. Im Prinzip sind problemlos verschiedene Nutquerschnitte als Stabvertiefungen 8 realisierbar. In Abhängigkeit vom Nutquerschnitt ist ein daran angepasstes Spreizwerkzeug einzusetzen um den aufgespreizten Stabquerschnitt ausbilden zu können. Erfindungsgemäß sind die nutartigen Stabvertiefungen 8 im Querschnitt V-förmig ausgebildet.

Die Erfindung soll nachstehend in einem Ausfuhrungsbeispiel an Hand der drei Figuren näher erläutert werden.
- Fig. 1: zeigt im Querschnitt einen Ausschnitt aus einem Kurschlussläufer 1 mit erfindungsgemäßen Kurzschlussläuferstäben 6 nach dem Einbau in die Nut und nach dem Spreizen mit gespreizten Stabbereich 9
- Fig. 2: zeigt eine Seitenansicht eines Kurzschlussläuferstabes 6 im Nutbereich
- Fig. 3: zeigt einen Kurzschlussläufer 1 mit Teilblechpaketen 14

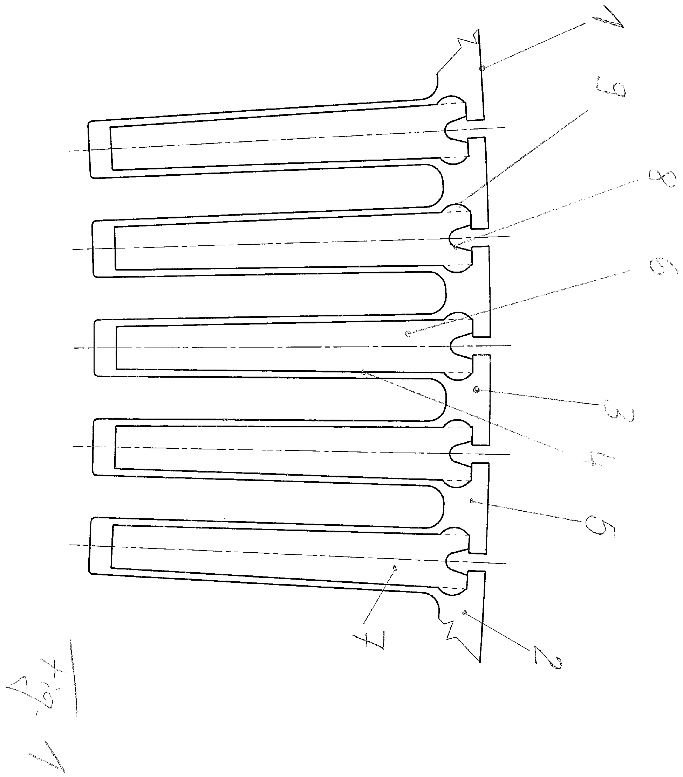

In der Figur 1 ist ein erfindungsgemäß ausgeführter Kurzschlussläufer 1 mit durchgehenden nutförmigen Stabvertiefungen 8 in allen Kurzschlussläuferstäben 6 des gesamten Kurzschlussläufers 1 gezeigt, d. h. die nutförmige Stabvertiefungen 8 sind im oberen Stabbereich 7 über die gesamte Stablänge 11 eingebracht. Abgebildet ist hier nur ein Ausschnitt mit fünf Läufernuten 4. Dabei handelt es sich um eine Ausführung mit in halbgeschlossenen Läufernuten 4 eingelegten Kurzschlussläuferstäben 6. Das Blechpaket 2 besteht aus vielen Einzelblechen, wobei die letzen Bleche bekanntermaßen, insbesondere die an den Nutausgängen 12 an den beiden Blechpaketenden 10 des Läufers oder an den Enden der Nutausgänge 12 an einzelnen Teilblechpaketen 13 zu einem Auffächern neigen, wenn sich die Kurzschlussstäbe 6 erwärmungsbedingt ausdehnen. Das Auffächern der Einzelbleche (nicht zeichnerisch dargestellt) erfolgt in erster Linie im Bereich der Zahnköpfe 5 der einzelnen Zähne 3 des Läuferblechpakets 4. Um dieses zuverlässig und dauerhaft zu verhindern ist im oberen Stabbereich, d. h. von der Staboberseite her, in jeden Kurzschlussstab 6 eine nutförmige Stabvertiefung 8 eingebracht, welche an allen Nutausgängen mittels eines geeigneten Werkzeuges wie z. B. mittels eines speziell geformten Meisels aufgespreizt ausgeführt ist. Durch diese in der Regel keilförmige Aufspreizung wird das Stabmaterial nach außen so weit verformt, dass es die Kanten der Zahnköpfe 5 außen an den Nutausgängen 12 umfasst. Zwar verhindert dies nicht das Auffächern der äußeren Bleche des Blechpaketes 2 während der Erwärmung, aber beim Abkühlen werden die aufgefächerten Blechbereiche der Zahnköpfe 5 wieder in ihre Ausgangslage zurück gezogen. Dies bewirkt, dass ein immer weiteres Auffächern der Bleche nach jedem Erwärmungsvorgang dauerhaft vermieden wird. Der Vorteil ist des weitern, dass die Aufspreizung in sehr einfacher Art und Weise mit geringem zusätzlichen Aufwand erfolgen kann. Zudem erfolgt keine Materialgefügeveränderung im tiefer liegenden Material des Kurzschlussläuferstabes. Eine Materialstauchung wird vermieden, da lediglich im Bereich der nutförmigen Stabvertiefung 8 Stabmaterial radial nach außen gedrückt wird.

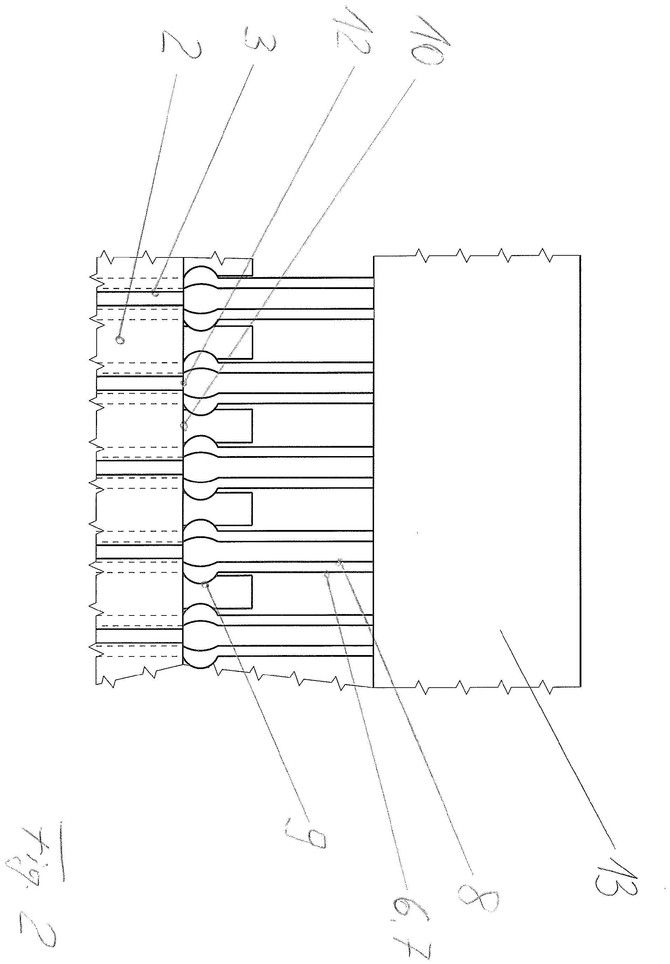

Figur 2 zeigt eine Draufsicht auf einen Ausschnitt der Läuferoberfläche des Kurzschlussläufers 1 mit fünf Läufernuten 4 am Blechpaketende 10. Hieraus ist ersichtlich wie das Stabmaterial nach dem Aufspreizen das Endblech des Blechpakets 2 im Bereich des Zahnkopfes 5, d. h. die Kante des Zahnes 3 am Nutausgang 12 umfasst und wie der gespreizte Stabbereich 9 ausgebildet ist. Gleichzeitig ist erkennbar, wie im oberen Bereich 7 des Kurzschlussläuferstabes 6 die nutförmige Stabvertiefung 8 über die gesamte Länge der einzelnen Kurzschlussläuferstäbe 6 angeordnet ist und bis in an den Kurzschlussring 13 herangeführt ist. Es sind auch Ausführungen möglich, wo sich die nutförmige Stabvertiefung 8 nicht über die gesamte Länge des Kurzschlussläuferstabes 6 bis an bzw. in den Kurzschlussring 13 erstreckt.

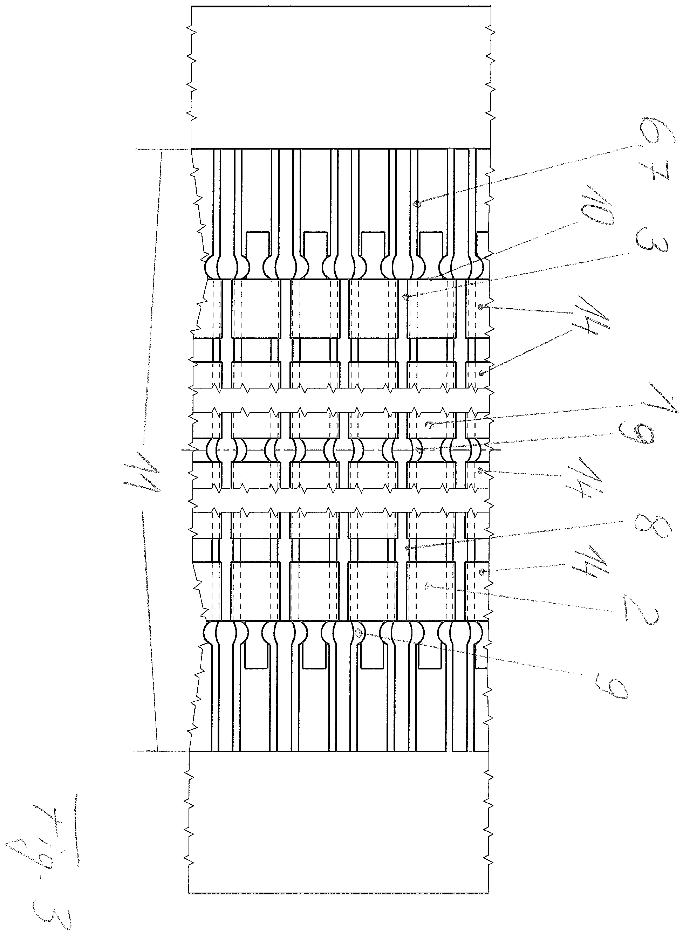

Figur 3 zeigt einen Kurzschlussläufer 1, welcher mit mehren einzelnen Teilblechpaketen 14 ausgeführt ist. Obwohl hier das Blechpaket 2 beispielsweise aus mehr als zwei Teilblechpaketen 14 besteht, sind nur hier in diesem speziellen Fall am Blechpaketende 10 und in der Kurzschlussläufermitte zwischen zwei benachbarten Teilblechpaketen 14 die erfindungsgemäßen gespreizten Stabbereiche 9 angeordnet. Zwischen den anderen Teilblechpaketen 14 sind zwar auch die nutförmigen Stabvertiefungen 8 in den Kurzschlussläuferstäben 6 im oberen Stabbereicht 7 angeordnet, aber diese sind jeweils nicht aufgespreizt ausgeführt. Diese gespreizten Stabbereiche 9 können aber auch anders in den Zwischenräumen zwischen den Teilblechpaketen 14 verteilt, als in Figur 3 dargestellt, angeordnet sein. Die Anordnung und Verteilung, die Form und Tiefe der nutförmigen Stabvertiefung 8 und der erfindungsgemäß gespreizten Stabbereiche 9 an den Nutausgängen 12 der Zähne 3 im Bereich der Zahnköpfe 5 ist abhängig von der Baugröße, der elektromagnetischen Auslegung und der konstruktiven Ausführung des Kurzschlussläufers 1 für rotierende elektrische Maschinen.
e Erfindung ist einsetzbar für Kurzschlussläufer in mittleren und großen rotierenden elektrischen Asynchronmaschinen mit Kurzschlussläuferstäben im Leistungsbereich größer 100 KW.

### Bezugszeichenliste

- 1: Kurschlussläufer
- 2: Blechpaket
- 3: Zahn
- 4: Läufernut
- 5: Zahnkopf
- 6: Kurschlussläuferstab
- 7: oberer Stabbereich
- 8: nutförmige Stabvertiefung
- 9: gespreizter Stabbereich
- 10: Blechpaketende
- 11: Stablänge
- 12: Nutausgang
- 13: Kurzschlussring
- 14: Teilblechpakete

## Patentansprüche

1. Kurschlussläufer (1) für rotierende elektrische Maschinen mit Zahnköpfen (5) und mit Kurschlussläuferstäben (6) aus einem Stabmaterial, wobei die Kurzschlussläuferstäbe (6) in die Läufernuten (4) eines Blechpakets (2) eingelegt und mit nutförmigen Stabvertiefungen (8) versehen sind, **dadurch gekennzeichnet,**
**dass** in den in die Läufernuten (4) im Blechpaket (2) verteilt eingelegten Kurschlussläuferstäben (6) im oberen Stabbereich (7) nutförmige und im Querschnitt wannenförmige oder V-förmige Stabvertiefungen (8), welche bis an den Kurzschlussring (13) herangeführt sind oder sich bis in den Kurzschlussring (13) erstrecken, durchgehend über die gesamte Stablänge (11) angeordnet sind und
die genuteten Kurzschlussläuferstäbe (6) nach oder an den Nutausgängen (12) keilförmig aufgespreizt ausgebildet sind, wobei das Stabmaterial nach außen so weit verformt ist, dass es die Kanten der Zahnköpfe (5) außen an den Nutausgängen (12) umfasst.

2. Kurschlussläufer mit Kurschlussläuferstäben nach Anspruch 1,
**dadurch gekennzeichnet,**
**dass** in allen Kurzschlussläuferstäben (6) im oberen Stabbereich (7) über die gesamte Stablänge (11) nutförmige und im Querschnitt wannenförmige oder V-förmige Stabvertiefungen (8), welche bis an den Kurzschlussring (13) herangeführt sind oder sich bis in den Kurzschlussring (13) erstrecken, angeordnet sind.

3. Kurschlussläufer mit Kurschlussläuferstäben nach Anspruch 1,
**dadurch gekennzeichnet,**
**dass** nur in jedem zweiten der Kurzschlussläuferstäbe (6) im oberen Stabbereich (7) über die gesamte Stablänge (11) nutförmige und im Querschnitt wannenförmige oder V-förmige Stabvertiefungen (8), welche bis an den Kurzschlussring (13) herangeführt sind oder sich bis in den Kurzschlussring (13) erstrecken, angeordnet sind.

4. Kurschlussläufer mit Kurschlussläuferstäben nach Anspruch 1,
**dadurch gekennzeichnet,**
**dass** bei Blechpaketen (2), welche aus zwei oder mehreren Teilblechpaketen (14) bestehen, die nutförmigen und im Querschnitt wannenförmigen oder V-förmigen Stabvertiefungen (8), welche bis an den Kurzschlussring (13) herangeführt sind oder sich bis in den Kurzschlussring (13) erstrecken, in den Kurzschlussläuferstäben (6) jeweils im Bereich der Nutausgänge (12) ausgebildet sind und an den Nutausgängen (12) gespreizte Stabbereiche (9) keilförmig aufgespreizt ausgebildet sind.

5. Kurschlussläufer mit Kurschlussläuferstäben nach Anspruch 1,
**dadurch gekennzeichnet,**
**dass** die im oberen Stabbereich (7) der Kurzschlussläuferstäbe (6) angebrachten nutförmigen und im Querschnitt wannenförmigen oder V-förmigen Stabvertiefungen (8), welche bis an den Kurzschlussring (13) herangeführt sind oder sich bis in den Kurzschlussring (13) erstrecken, in den Kurzschlussläuferstäben (6) nur jeweils im Bereich der Nutausgänge (12) an den beiden Enden des Blechpakets (2) keilförmig aufgespreizt ausgebildet sind.

## Claims

1. Squirrel-cage rotor (1) for rotating electric machines, having tooth tips (5) and squirrel-cage rotor bars (6) made of a bar material, wherein the squirrel-cage rotor bars (6) are inserted in the rotor slots (4) of a lamination stack (2) and provided with groove-shaped bar recesses (8),
**characterized in that**
in the upper bar region (7), the squirrel-cage rotor bars (6) inserted in a distributed manner in the rotor slots (4) on the lamination stack (2) have slot-like bar recesses (8) of a trough-shaped or v-shaped cross-section, which are approached to the rotor end ring (13) or extend as far as into the rotor end ring (13), arranged continuously over the whole bar length (11) and the slotted squirrel-cage rotor bars (6) are spread apart in a wedge shape after or at the slot exits (12),
wherein the bar material is deformed toward the outside such that it engages the edges of the tooth tips (5) at the outside of the slot exits (12).

2. Squirrel-cage rotor with squirrel-cage rotor bars according to claim 1,
**characterized in that**
all squirrel-cage rotor bars (6) have slot-like bar recesses (8) of a trough-shaped or v-shaped cross-section arranged in the upper bar region (7) over the whole bar length (11), which recesses are approached to the rotor end ring (13) or extend as far as into the rotor end ring (13).

3. Squirrel-cage rotor with squirrel-cage rotor bars according to claim 1,
**characterized in that**
only every second of the squirrel-cage rotor bars (6) has slot-like bar recesses (8) of a trough-shaped or v-shaped cross-section arranged in the upper bar region (7) along the whole bar length (11), which recesses are approached to the rotor end ring (13) or extend as far as into the rotor end ring (13).

4. Squirrel-cage rotor with squirrel-cage rotor bars according to claim 1,
**characterized in that**
in lamination stacks (2) consisting of two or more lamination sub-stacks (14), the slot-like bar recesses (8) of a trough-shaped or v-shaped cross-section, which recesses are approached to the rotor end ring (13) or extend as far as into the rotor end ring (13), are each formed in the squirrel-cage rotor bars (6) in the regions of the slot exits (12) and bar regions (9) are spread apart in a wedge shape at the slot exits (12).

5. Squirrel-cage rotor with squirrel-cage rotor bars according to claim 1,
**characterized in that**
the slot-like bar recesses (8) of a trough-shaped or v-shaped cross-section arranged in the upper bar region (7) of the squirrel-cage rotor bars (6) and which are approached to the rotor end ring (13) or extend as far as into the rotor end ring (13) are each formed in the squirrel-cage rotor bars (6) as being spread apart in a wedge shape only in the regions of the slot exits (12) at both ends of the lamination stack (2).

## Revendications

1. Rotor en court-circuit (1) pour machines électriques rotatives, ayant des têtes de dent (5) et des barres de rotor en court-circuit (6) d'un matériau de barre, dans lequel les barres de rotor en court-circuit (6) sont insérées dans les encoches rotoriques (4) d'un paquet de tôles (2) et dotés de creux de barre (8) en forme de rainure,
**caractérisé en ce que**
dans la région supérieure (7) des barres de rotor en court-circuit (6) insérées dans les encoches rotoriques (4) du paquet de tôles (2), des creux de barre (8) en forme de rainures dont la section transversale est en forme de cuve ou bien de V, lesquels s'approchent de la bague de court-circuit (13) ou s'étendent jusque dans la bague de court-circuit (13), sont disposés en continu sur toute la longueur (11) de la barre et que les barres de rotor en court-circuit (6) rainurées s'écartent en forme de coin après les rainures (12) ou à leurs sorties, le matériau des barres étant déformé vers l'extérieur de sorte qu'il s'engage dans les bords des têtes de dent (5) à l'extérieur des sorties des rainures (12).

2. Rotor en court-circuit ayant des barres de rotor en court-circuit selon la revendication 1,
**caractérisé en ce que**
dans la région supérieure (7) de toutes les barres de rotor en court-circuit (6), des creux de barre (8) en forme de rainures dont la section transversale est en forme de cuve ou bien de V, lesquels s'approchent de la bague de court-circuit (13) ou s'étendent jusque dans la bague de court-circuit (13), sont disposés sur toute la longueur (11) de la barre.

3. Rotor en court-circuit ayant des barres de rotor en court-circuit selon la revendication 1,
**caractérisé en ce que**
dans la région supérieure (7) de seule une sur deux des barres de rotor en court-circuit (6), des creux de barre (8) en forme de rainures dont la section transversale est en forme de cuve ou bien de V, lesquels s'approchent de la bague de court-circuit (13) ou s'étendent jusque dans la bague de court-circuit (13), sont disposés sur toute la longueur (11) de la barre.

4. Rotor en court-circuit ayant des barres de rotor en court-circuit selon la revendication 1,
**caractérisé en ce que**
sur les paquets de tôles (2) consistant en deux ou plusieurs paquets partiels de tôles (14), les creux de barre (8) en forme de rainures dont la section transversale est en forme de cuve ou bien de V, lesquels s'approchent de la bague de court-circuit (13) ou s'étendent jusque dans la bague de court-circuit (13), sont chacun formés dans les barres de rotor en court-circuit (6) à proximité des sorties des rainures (12) et des régions de barre (9) sont formées en s'écartant en forme de coin aux sorties des rainures (12).

5. Rotor en court-circuit aux barres de rotor en court-circuit selon la revendication 1,
**caractérisé en ce que**
les creux de barre (8) en forme de rainures dont la section transversale est en forme de cuve ou bien de V, disposés dans la région supérieure (7) des barres de rotor en court-circuit (6), et lesquels s'approchent de la bague en court-circuit (13) ou s'étendent jusque dans la bague de court-circuit (13), sont chacun formés dans les barres de rotor en court-circuit (6) en s'écartant en forme de coin seulement à proximité des sorties des rainures (12) aux deux extrémités du paquet de tôles (2).
